# EUROPEAN PATENT APPLICATION

(11) **EP 4 177 769 A1**
(43) Date of publication of application: **10.05.2023**
(21) Application number: 22185259.3
(22) Date of filing: 15.07.2022
(51) Int. Cl.: G06F 16/332

(54) **METHOD, SYSTEM, AND COMPUTER-READABLE RECORDING MEDIUM FOR KEYWORD REVIEW THAT REPLACES STAR REVIEW**

(30) Priority: 05.11.2021 KR 20210151629
(71) Applicant: Naver Corporation, Seongnam-si, Gyeonggi-do 13561 (KR)
(72) Inventor: LEE, Keonsu, 13561 Seongnam-si (KR); LEE, YungSeong, 13561 Seongnam-si (KR); KIM, Jisu, 13561 Seongnam-si (KR); PARK, Mi Ju, 13561 Seongnam-si (KR); KIM, Kyungil, 13561 Seongnam-si (KR); BAEK, Youngmi, 13561 Seongnam-si (KR); KANG, Insung, 13561 Seongnam-si (KR); SHIN, You Jin, 13561 Seongnam-si (KR); PARK, Jiwon, 13561 Seongnam-si (KR); KIM, Yejin, 13561 Seongnam-si (KR); LIM, Joo Youl, 13561 Seongnam-si (KR); HA, Selin, 13561 Seongnam-si (KR); PARK, Bo Eun, 13561 Seongnam-si (KR)
(74) Representative: V.O.

(57) **Abstract**

Disclosed are a method, a system, and a non-transitory computer-readable recording medium for a keyword review that replaces a star review. A keyword review method includes registering at least one of a word, a phrase, and a sentence indicating characteristics of a place as a keyword list related to the place; and providing the keyword list to a user that visits or uses the place and registering at least one keyword selected from the keyword list as a review for the place.

## Description

### BACKGROUND

### TECHNICAL FIELD

Some example embodiments of the following description relate to technology for improving a review system for a place.

### RELATED ART

As an example of a user review for a place, an evaluation system using a star rating is being used.

For example, technology for creating store review information using augmented reality (AR) is disclosed in Korean Patent Laid-Open Publication No. 10-2020-0000925, published on January 6, 2020.

A place review service may authenticate a place visited or used by a user using a place reservation function and a receipt authentication function and then may submit information about the authenticated place with relevant reviews.

A user review for a place may be displayed in conjunction with not only the place review service but also other services that provide place information, such as a search service and a map service. In the case of a star rating review, an average of scores left by users that have visited or used the place may be displayed.

In the case of such a star rating review, a person concerned with a corresponding place (a business owner, etc.) has some difficulty due to a structure in which an evaluation is made based on points scored by users and low star ratings of some users greatly affects the overall average.

On a user side, while it is convenient to simply filter places through star rating reviews, it is difficult to reflect individual tastes. Therefore, a distortion is present in terms of review consumption.

### SUMMARY

Some example embodiments may provide a keyword review as a new review system that may replace a star rating review.

Some example embodiments may replace a one-sided review environment based on a star rating with a review environment for expressing qualitative information of a place.

Some example embodiments may provide a review method for selecting a keyword close to a user experience according to a visit or use from among keywords indicating characteristics of a place.

According to an aspect of at least one example embodiment, there is provided a keyword review method performed by a computer system including at least one processor configured to execute computer-readable instructions included in a memory, the keyword review method including, by the at least one processor, registering at least one of a word, a phrase, and a sentence indicating characteristics of a place as a keyword list related to the place; and providing the keyword list to a user that visits or uses the place and registering at least one keyword selected from the keyword list as a review for the place.

The registering as the keyword list related to the place may include constructing a candidate keyword pool related to each type of business by type of business; and providing the candidate keyword pool corresponding to a type of business of the place to a relevant person of the place and registered at least one keyword selected from the candidate keyword pool to the keyword list.

The registering as the keyword list related to the place may include extracting a keyword related to the place from among a document on the Internet, search log data, and a text review related to the place, in a form of at least one of the word, the phrase, and the sentence.

The registering as the keyword list related to the place may include extracting a keyword related to the place from a word dictionary that includes a word or a hashtag appearing in a document on the Internet in which the place is mentioned.

The registering as the keyword list related to the place may include extracting a keyword related to the place from a text review of the place based on feedback from other users on the text review.

The registering as the keyword list related to the place may include registering a keyword related to the place through learning using an artificial intelligence model for a keyword on a document related to the place.

The registering as the keyword list related to the place may include excluding at least one of a keyword indicating factual information and a keyword indicating a negative meaning from the candidate keyword pool.

The registering as the review for the place may include registering a review using the keyword list within a preset number of times based on a type of business or a region of the place for each user.

The keyword review method may further include, by the at least one processor, visualizing and providing keyword statistics registered as the review for the place.

The visualizing and the providing of the keyword statistics may include providing the keyword statistics by at least one criterion among a unit period, a gender, an age, and a region.

The keyword review method may further include, by the at least one processor, providing at least one keyword registered as the review for the place as a search filter for a place search.

According to an aspect of at least one example embodiment, there is provided a non-transitory computer-readable recording medium storing a computer program to computer-implement the keyword review method.

According to an aspect of at least one example embodiment, there is provided a computer system including at least one processor configured to execute computer-readable instructions included in a memory. The at least one processor is configured to perform a process of registering at least one of a word, a phrase, and a sentence indicating characteristics of a place as a keyword list related to the place, and a process of providing the keyword list to a user that visits or uses the place and registering at least one keyword selected from the keyword list as a review for the place.

According to some example embodiments, it is possible to replace a one-sided review environment based on a star rating with a review environment for expressing qualitative information of a place by providing a review method for selecting a keyword close to a user experience according to a visit or use from among keywords indicating characteristics of a place.

Further areas of applicability will become apparent from the description provided herein. The description and specific examples in this summary are intended for purposes of illustration only and are not intended to limit the scope of the present disclosure.

### BRIEF DESCRIPTION OF DRAWINGS

FIG. 1 is a diagram illustrating an example of a network environment according to at least one example embodiment;
FIG. 2 is a diagram illustrating an example of a computer system according to at least one example embodiment;
FIG. 3 illustrates an example of a component includable in a processor of a computer system according to at least one example embodiment;
FIG. 4 is a flowchart illustrating an example of a method performed by a computer system according to at least one example embodiment;
FIG. 5 illustrates an example of a process of selecting a review keyword list according to at least one example embodiment;
FIGS. 6 and 7 illustrate examples of a process of registering a keyword review according to at least one example embodiment;
FIGS. 8A and 8B illustrate examples of a process of providing keyword statistics according to at least one example embodiment; and
FIGS. 9 and 10 illustrate examples of a place search process using a review keyword according to at least one example embodiment.

### DETAILED DESCRIPTION

Hereinafter, some example embodiments are described with reference to the accompanying drawings.

The example embodiments relate to technology that may enhance a review system for a place.

The example embodiments including disclosures herein may provide a keyword review capable of intuitively grasping characteristics of a place as a new review system capable of replacing a star rating review.

Herein, the term "place" may inclusively indicate all the objects for reviewing a user experience according to a visit or use, for example, a restaurant, a store, an attraction, and a hot place. Reviews for such a place may include reviews for user experience offline and also include reviews for user experience online, such as commerce or virtual performance/exhibition.

A keyword review system according to some example embodiments may be implemented by at least one computer system. A keyword review method according to some example embodiments may be performed by at least one computer system included in the keyword review system. Here, a computer program according to an example embodiment may be installed and run on the computer system and the computer system may perform the keyword review method according to example embodiments under control of the computer program. The aforementioned computer program may be stored in a computer-readable recording medium to implement the keyword review method in conjunction with the computer system.

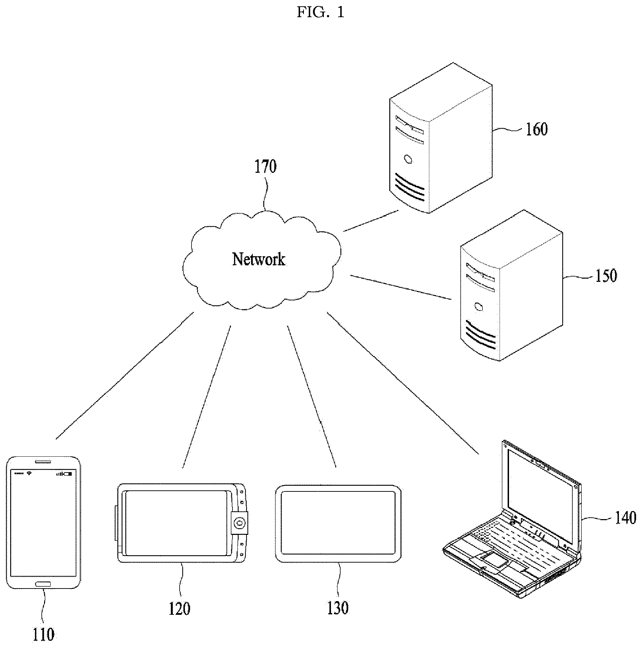

FIG. 1 illustrates an example of a network environment according to at least one example embodiment. Referring to FIG. 1, the network environment may include a plurality of electronic devices 110, 120, 130, and 140, a plurality of servers 150 and 160, and a network 170. FIG. 1 is provided as an example only. A number of electronic devices or a number of servers is not limited thereto. Also, the network environment of FIG. 1 is provided as one example of environments applicable to the example embodiments and an environment applicable to the example embodiments is not limited to the network environment of FIG. 1.

Each of the plurality of electronic devices 110, 120, 130, and 140 may be a fixed terminal or a mobile terminal that is configured as a computer system. For example, the plurality of electronic devices 110, 120, 130, and 140 may be a smartphone, a mobile phone, a navigation device, a computer, a laptop computer, a digital broadcasting terminal, a personal digital assistant (PDA), a portable multimedia player (PMP), a tablet PC, a game console, a wearable device, an Internet of things (IoT) device, a virtual reality (VR) device, an augmented reality (AR) device, and the like. For example, although FIG. 1 illustrates a shape of a smartphone as an example of the electronic device 110, the electronic device 110 used herein may refer to one of various types of physical computer systems capable of communicating with other electronic devices 120, 130, and 140, and/or the servers 150 and 160 over the network 170 in a wireless or wired communication manner.

The communication scheme is not limited and may include a near field wireless communication scheme between devices as well as a communication scheme using a communication network (e.g., a mobile communication network, wired Internet, wireless Internet, and a broadcasting network.) includable in the network 170. For example, the network 170 may include at least one of network topologies that include a personal area network (PAN), a local area network (LAN), a campus area network (CAN), a metropolitan area network (MAN), a wide area network (WAN), a broadband network (BBN), and the Internet. Also, the network 170 may include at least one of network topologies that include a bus network, a star network, a ring network, a mesh network, a star-bus network, a tree or hierarchical network, and the like. However, they are provided as examples only.

Each of the servers 150 and 160 may be configured as a computer system or a plurality of computer systems that provides an instruction, a code, a file, content, a service, etc., through communication with the plurality of electronic devices 110, 120, 130, and 140 over the network 170. For example, the server 150 may be a system that provides a first service to the plurality of electronic devices 110, 120, 130, and 140 connected over the network 170, and the server 160 may be a system that provides a second service to the plurality of electronic devices 110, 120, 130, and 140 connected over the network 170. In detail, the server 150 may provide a service (e.g., a place review service) desired by a corresponding application as the first service to the plurality of electronic devices 110, 120, 130, and 140 through the application as a computer program installed and running on the plurality of electronic devices 110, 120, 130, and 140. As another example, the server 160 may provide a service that distributes a file for installation and running of the application to the plurality of electronic devices 110, 120, 130, and 140 as the second service.

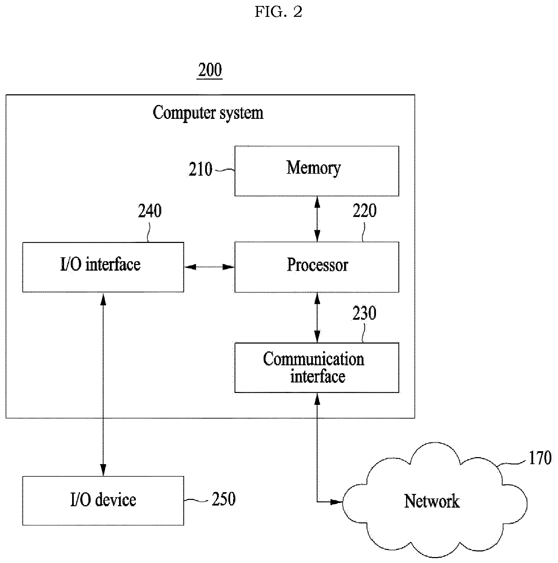

FIG. 2 is a block diagram illustrating an example of a computer system according to at least one example embodiment. Each of the plurality of electronic devices 110, 120, 130, and 140 or each of the servers 150 and 160 may be implemented by a computer system 200 of FIG. 2.

Referring to FIG. 2, the computer system 200 may include a memory 210, a processor 220, a communication interface 230, and an input/output (I/O) interface 240.

The memory 210 may include a permanent mass storage device, such as a random access memory (RAM), a read only memory (ROM), and a disk drive, as a non-transitory computer-readable recording medium. The permanent mass storage device, such as ROM and a disk drive, may be included in the computer system 200 as a permanent storage device separate from the memory 210. Also, an OS and at least one program code may be stored in the memory 210. Such software components may be loaded to the memory 210 from another non-transitory computer-readable recording medium separate from the memory 210. The other non-transitory computer-readable recording medium may include a non-transitory computer-readable recording medium, for example, a floppy drive, a disk, a tape, a DVD/CD-ROM drive, a memory card, etc. According to other example embodiments, software components may be loaded to the memory 210 through the communication interface 230, instead of the non-transitory computer-readable recording medium. For example, the software components may be loaded to the memory 210 of the computer system 200 based on a computer program installed by files received over the network 170.

The processor 220 may be configured to process instructions of a computer program by performing basic arithmetic operations, logic operations, and I/O operations. The computer-readable instructions may be provided by the memory 210 or the communication interface 230 to the processor 220. For example, the processor 220 may be configured to execute received instructions in response to a program code stored in a storage device, such as the memory 210.

The communication interface 230 may provide a function for communication between the communication apparatus 200 and another apparatus, for example, the aforementioned storage devices. For example, the processor 220 of the computer system 200 may forward a request or an instruction created based on a program code stored in the storage device such as the memory 210, data, and a file, to other apparatuses over the network 170 under control of the communication interface 230. Inversely, a signal, an instruction, data, a file, etc., from another apparatus may be received at the computer system 200 through the communication interface 230 of the computer system 200. For example, a signal, an instruction, data, etc., received through the communication interface 230 may be forwarded to the processor 220 or the memory 210, and a file, etc., may be stored in a storage medium, for example, the permanent storage device, further includable in the computer system 200.

The I/O interface 240 may be a device used for interfacing with an I/O apparatus 250. For example, an input device may include a device, such as a microphone, a keyboard, a mouse, etc., and an output device may include a device, such as a display, a speaker, etc. As another example, the I/O interface 240 may be a device for interfacing with an apparatus in which an input function and an output function are integrated into a single function, such as a touchscreen. The I/O apparatus 250 may be configured as a single apparatus with the computer system 200.

Also, according to other example embodiments, the computer system 200 may include a greater or smaller number of components than the number of components of FIG. 2. However, there is no need to clearly illustrate most conventional components. For example, the computer system 200 may be configured to include at least a portion of the I/O apparatus 250 or may further include other components, such as a transceiver and a database.

Hereinafter, a method and system for a keyword review that replaces a star rating according to example embodiments will be described.

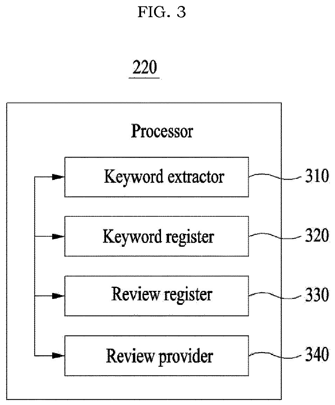

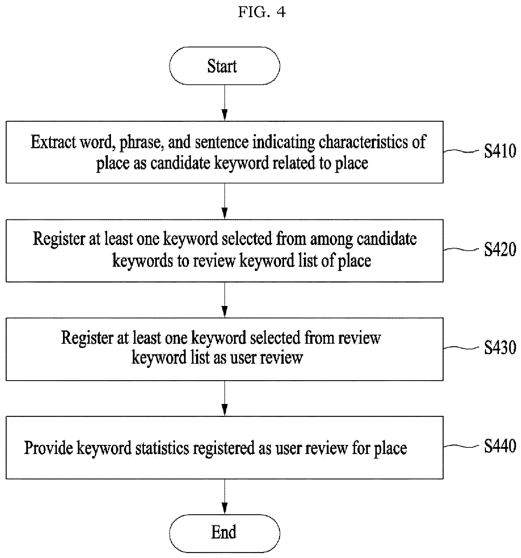

FIG. 3 is a diagram illustrating an example of a component included in a processor of a computer system according to at least one example embodiment, and FIG. 4 is a flowchart illustrating an example of a keyword review method performed by a computer system according to at least one example embodiment.

The computer system 200 according to the example embodiment may provide a place review service through connection to an exclusive application installed on a client or a website/mobile site related to the computer system 200 to the client.

Referring to FIG. 3, the processor 220 of the computer system 200 may include a keyword extractor 310, a keyword register 320, a review register 330, and a review provider 340 as components to perform the following keyword review method. Depending on example embodiments, components of the processor 220 may be selectively included in or excluded from the processor 220. Also, depending on example embodiments, the components of the processor 220 may be separated or merged for functional representation of the processor 220.

The processor 220 and the components of the processor 220 may control the computer system 200 to perform operations included in the following keyword review method. For example, the processor 220 and the components of the processor 220 may be configured to execute an instruction according to a code of at least one program and a code of an OS included in the memory 210.

Here, the components of the processor 220 may be representations of different functions performed by the processor 220 in response to an instruction provided from a program code stored in the computer system 200. For example, the extractor 310 may be used as a functional representation of the processor 220 that controls the computer system 200 to extract a keyword related to a place in response to the instruction.

The processor 220 may read a necessary instruction from which instructions related to control of the computer system 200 are loaded. In this case, the read instruction may include an instruction for controlling the processor 220 to perform the following keyword review method.

Operations included in the following keyword review method may be performed in order different from illustrated order. A portion of the operations may be omitted or an additional process may be further included.

Referring to FIG. 4, in operation S410, a keyword extractor 310 may extract a candidate keyword related to a corresponding place as a keyword indicating qualitative information of the place. The keyword extractor 310 may construct a candidate keyword pool by extracting a word, a phrase, and a sentence indicating characteristics of the place. To utilize collective intelligence in discovering places users may visit, the candidate keyword pool may be constructed by collecting characteristics of places users mainly desire to go by type of business.

For example, the keyword extractor 310 may extract a word, a phrase, and a sentence indicating characteristics of each type of business by type of business from among documents (e.g., posts) on the Internet related to the place, search log data, text reviews registered as user reviews as candidate keywords. The keyword extractor 310 may extract a word, a phrase, or a sentence input with at least one keyword from among a region name and a busines name from a search keyword. For example, the keyword extractor 310 may extract "cost-effectiveness" from a search keyword < cost-effective must-go-restaurant in Gangnam> as a candidate keyword. The keyword extractor 310 may extract a tag (e.g., view restaurant, healthy taste, bread pilgrimage, vegetarianism, gluten free, etc.) frequently used in posts, such as a community timeline or a blog, or may extract a word, a phrase, and a sentence (e.g., boss is kind, washroom is clean, atmosphere is good, photos look great, etc.) that frequently appears in text reviews written by users.

As another example, the keyword extractor 310 may extract a candidate keyword of a corresponding place using a word dictionary in which a theme keyword is mapped for each place. Words or hashtags appearing in documents on the Internet in which a corresponding place is mentioned as a theme keyword of the corresponding place for each place may be constructed as the word dictionary. Here, the keyword extractor 310 may create a candidate keyword pool for each type of business using the word dictionary.

As another example, the keyword extractor 310 may extract a candidate keyword based on feedback of users that have actually visited or used a corresponding place with respect to a text review for the place. For example, by granting a right to vote for a review of a previous user having visited or used the place to a subsequent user having visited or used the place and by using voting results as official tips, a candidate keyword of the corresponding place may be extracted from a review with high agreement from a subsequent user among previous user reviews.

As another example, the keyword extractor 310 may create a candidate keyword pool by extracting a keyword in place unit through an artificial intelligence model. The keyword extractor 310 may extract a word, a phrase, and a sentence, beyond a keyword by type of business, and suitable for an individual place, through learning using the artificial intelligence model with respect to a keyword in a place-related document. The scope of documents used for keyword learning may include all of a place review service homepage, a place detail page, a business operator detail page, a visitor review, and documents on other linked services.

The keyword extractor 310 may refine the candidate keyword pool by excluding, from the candidate keyword pool, a keyword corresponding to factual information, such as a location or business hours and a menu of a place, and a keyword including a negative meaning and by leaving an opinion keyword corresponding to evaluation information. Depending on example embodiments, a keyword corresponding to factual information included in the candidate keyword pool may be changed to a review keyword and thereby used. For example, the keyword extractor 310 may change and use factual information indicating presence of a parking space as a review keyword, such as "I like that the parking space is large." Also, with respect to a candidate keyword pool for each type of business, the keyword extractor 310 may conduct a voting for at least one of an operator and a general user of a corresponding type of business and may refine the corresponding candidate keyword pool based on voting results.

The keyword extractor 310 may classify keywords included in the candidate keyword pool of each type of business into at least two topics by type of business. For example, in the case of a type of business corresponding to a restaurant, candidate keywords may be classified into three topics, food/price, atmosphere, and convenience facilities.

According to the example embodiments, since it is possible to select and use a candidate keyword indicating characteristics of a place using a descriptive phrase or sentence as well as a word, any user may understand it at a glance.

In operation S420, the keyword register 320 may register at least one keyword selected from the candidate keyword pool to a review keyword list for registering a review of the corresponding place by place. For example, the keyword register 320 may provide a candidate keyword pool corresponding to a type of business of a corresponding place for an operator of each place by place and may register a keyword selected by the corresponding operator from the candidate keyword pool as a review keyword list for the place of the operator. An operator of each place may select m keywords for each of n topic groups from a corresponding candidate keyword pool and may register the selected m keywords as a review keyword list. In addition to determining the review keyword list through a direct selection from the operator, the review keyword list may be determined using keywords selected based on place-related information inside a system. For example, the review keyword list may be automatically determined based on keywords frequently input from users with hashtags or text reviews in relation to the corresponding place.

A number of keywords is limited to make it possible to clearly compare characteristics of a corresponding place to those of other places by appropriately setting a selectable width for a place review and converging to a desired number of keywords.

Depending on example embodiments, a keyword directly selected by the operator may be included in the review keyword list in addition to a keyword included in the candidate keyword pool.

In operation S430, the review register 330 may provide the review keyword list such that a user having visited or used the place may leave a keyword review for the place, and may register at least one keyword selected from the review keyword list as a user review for the corresponding place. The review register 330 may register a keyword review for the corresponding place through user feedback on a keyword indicating characteristics of the place. Each user may register a keyword review at least once, which may be determined based on a type of business or a region of a place to be reviewed. That is, each user may register a keyword review within a predetermined (or, alternatively, desired) number of times based on a type of business or a region for a corresponding place. A keyword review registration method may employ a method of selecting at least one review keyword list by providing review keyword lists for the respective topics in a parallel list form or a method of selecting one of both by sequentially providing keywords with opposite characteristics in pairs.

In operation S440, the review provider 340 may provide keyword statistics registered as user reviews for the corresponding place as user feedback results for a keyword indicating characteristics of the place. That is, the review provider 340 may visualize and display statistical information about a keyword selected by users that have visited or used the place. For example, the review provider 340 may display a keyword with a large selection weight to be larger in a review keyword list of the place such that the user may grasp characteristics of the place at a glance. Here, the review provider 340 may simply accumulate or index and then display a number of selections for each keyword.

The review provider 340 may dividedly display keyword statistics by unit period (e.g., 6 months, 1 year, etc.). Also, the review provider 340 may dividedly display the keyword statistics by various criteria, such as gender, age, and region. Also, the review provider 340 may display a keyword having risen sharply in ranking based on keyword statistics of a specific period and a keyword that newly appears in ranking. In addition, the review provider 340 may provide results of comparing other places of the same type of business or surrounding commercial areas to keyword statistics for the corresponding place in association with the keyword statistics.

The review provider 340 may provide keywords indicating characteristics of a place to be searched for through a search filter when conducting a place search, and may include, in search results, a place in which a keyword corresponding to the search filter is registered as a user view and may provide the search results. Here, the review provider 340 may display a place in which a keyword corresponding to the search filter is registered as more user reviews on a top. The review provider 340 may display a place with a high ratio compared to a number of review registrations on a top of search results, such as a rapidly rising popular place, in addition to a simple number of registrations.

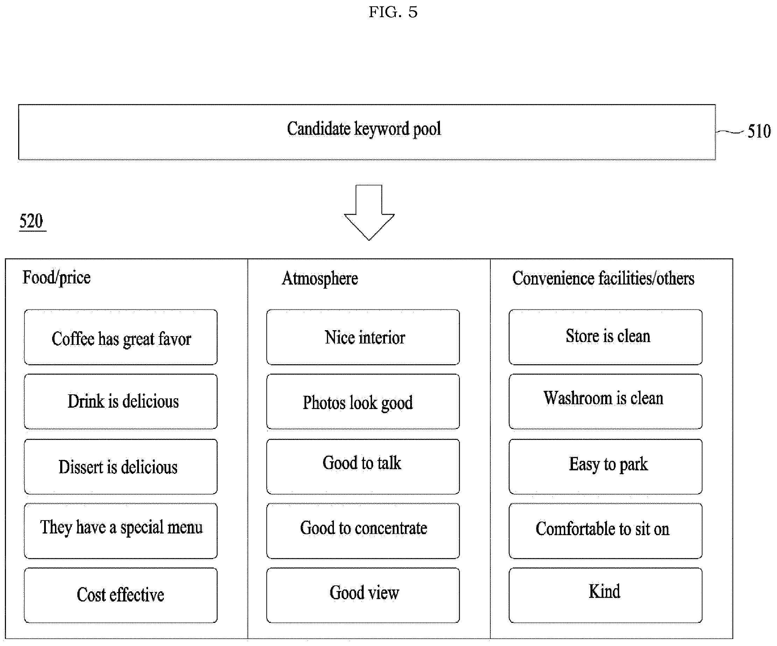

FIG. 5 illustrates an example of a process of selecting a review keyword list according to at least one example embodiment.

Referring to FIG. 5, the processor 220 may provide an operator with a candidate keyword pool 510 according to a type of business of the corresponding operator. The operator may select, from the candidate keyword pool 510, a keyword suitable for a place corresponding to business of the operator and also well expressing characteristics of the place and may register a review keyword list 520 that may be voted for in a form of a review from users.

The candidate keyword pool 510 may be classified into at least two topic groups by type of business and the operator may select, from the candidate keyword pool 510, at least one keyword for each topic group and may register the selected keyword to the review keyword list 520.

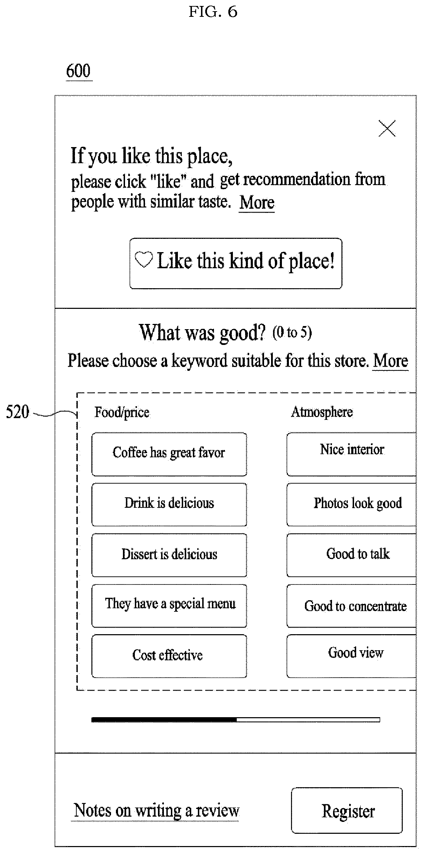

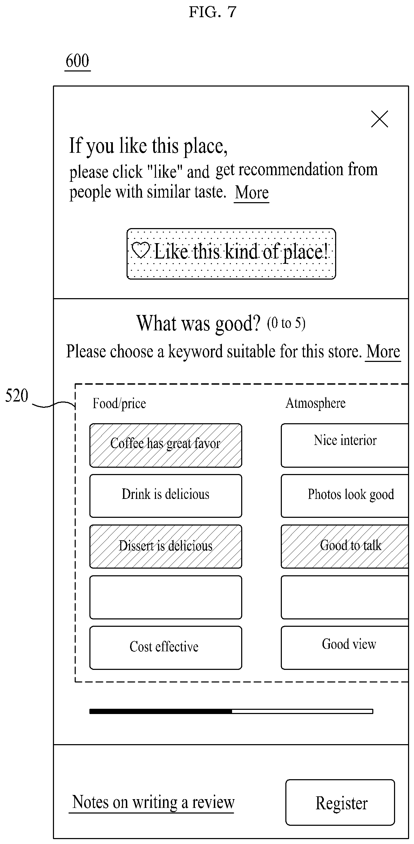

FIGS. 6 and 7 illustrate examples of a process of registering a keyword review according to at least one example embodiment.

The processor 220 may provide a place reservation function, a receipt authentication function, and the like, through a place review service platform, and, through this, may authenticate a place visited or used by a user and then may match and register authenticated place information and a review written by the user.

Referring to FIG. 6, the processor 220 may provide a review writing screen 600 for a specific place to a user that has visited or used the specific place. Here, the review keyword list 520 registered by an operator of the specific place may be displayed on the review writing screen 600.

Here, in addition to a scheme in which topic groups included in the review keyword list 520 and display order of keywords included in each topic group are fixed, a random rolling scheme may be applied to the review writing screen 600. Also, keywords for each topic group may be displayed according to scrolling on the review writing screen 600.

The review writing screen 600 may include an interface for user feedback on the review keyword list 520. For example, as an interface for inputting absence of a keyword to be selected as a review in the review keyword list 520, the processor 220 may provide an interface capable of directly inputting a user opinion on the review keyword list 520 or other keywords to be suggested in addition to the review keyword list 520.

The processor 220 may provide the review keyword list 520 selected by the operator of the corresponding place through the review writing screen 600 for a keyword review that may replace a star rating review as a user review for the specific place.

Referring to FIG. 7, the user may select at least one keyword for each topic from the review keyword list 520 by finding a keyword close to user experience according to a visit or use of the place. The processor 220 may register at least one keyword selected by the user from the review keyword list 520 as a keyword review of the user for the corresponding place. The processor 220 may simply accumulate or index a number of selections for each keyword registered as a review for each place.

The review writing screen 600 may include an interface capable of inputting a "like" reaction, an interface capable of inputting a star rating, an interface capable of uploading a photo review or writing a text review, etc., with a keyword review for the corresponding place.

Depending on example embodiments, as a star rating review is replaced with a keyword review, an interface for inputting a star rating review may be omitted from the review writing screen 600.

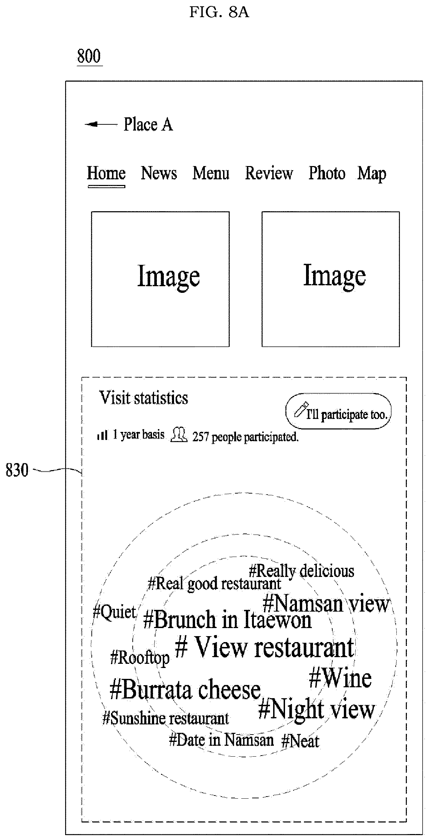

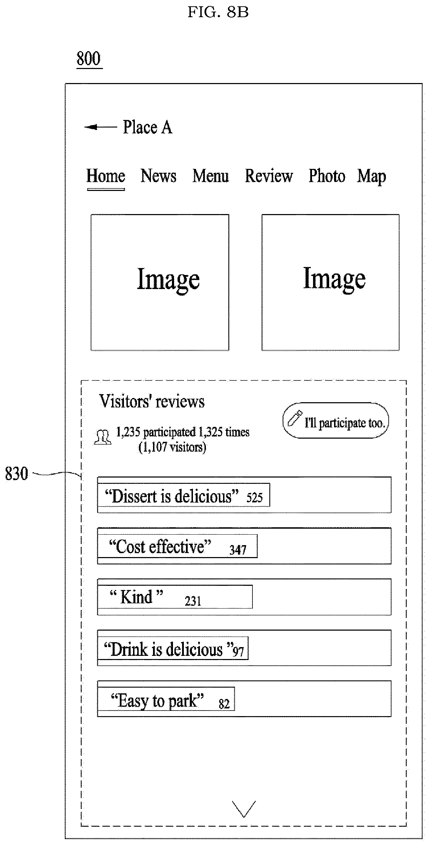

FIGS. 8A and 8B illustrate examples of a process of providing keyword statistics according to at least one example embodiment.

Referring to FIGS. 8A and 8B, in response to a user request, the processor 220 may provide a place information screen 800 that includes information about a specific place. The processor 220 may visualize and display keyword statistics 830 registered as user reviews on the place information screen 800 such that a user may grasp characteristics of the corresponding place. Referring to FIG. 8A, the processor 220 may visualize the keyword statistics 830 through a statistical graph type showing a keyword with a large number of review registrations in larger letters. Referring to FIG. 8B, the processor 220 may visualize the keyword statistics 830 through a bar graph showing a number of review registrations for each keyword. In addition thereto, the processor 220 may visualize the keyword statistics 830 using various types of graphs, for example, a pie graph, a band graph, and a line graph. The keyword statistics 830 may include all the keywords included in the review keyword list 520. Here, a keyword with a higher frequency selected for a keyword review may be displayed in a more easily identifiable form, for example, in a form in which a bold thickness or highlight color is applied to letters.

The processor 220 may dividedly display the keyword statistics 830 by unit period (e.g., 1 week, 1 month, etc.), or may dividedly display the keyword statistics 830 by various criteria, such as gender, age, and region. The processor 220 may display user information (e.g., a profile) of a user that selects a corresponding keyword as a keyword review for each keyword included in the keyword statistics 830. Here, in response to selecting a specific user, the processor 220 provides an interface for verifying a review left by the selected specific user.

The processor 220 may provide various statistical information, such as time distribution, gender distribution, and age distribution, of users having visited or used the place with the keyword statistics 830, through the place information screen 800.

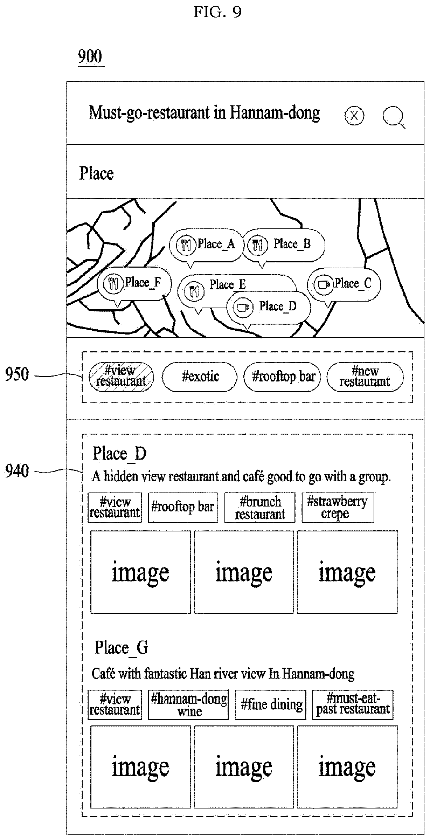

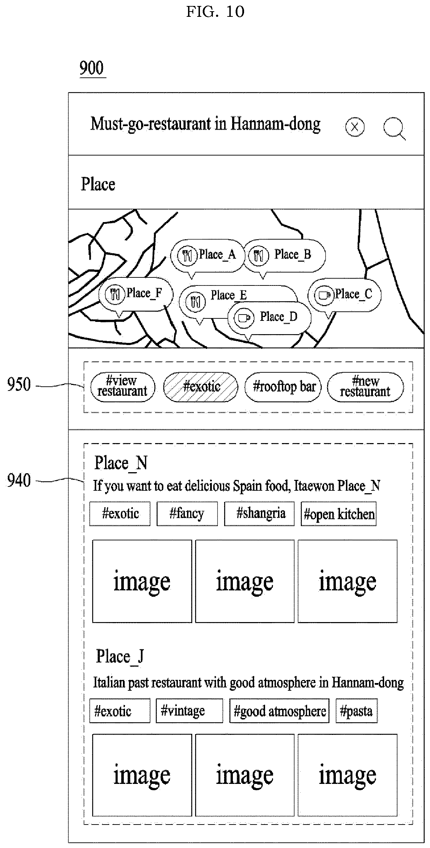

FIGS. 9 and 10 illustrate examples of a place search process using a review keyword according to at least one example embodiment.

The processor 220 may provide a keyword that appears in a keyword review for a place in a place search environment through a search filter.

Referring to FIG. 9, when a search keyword is input to a place search screen 900, the processor 220 may provide a place list 940 as initial search results corresponding to the search keyword.

The processor 220 may extract keyword that frequently appear and meet a predetermined (or, alternatively, desired) criterion from keyword reviews of a place included in the initial search results and may provide the extracted keywords through a search filter 950. That is, the processor 220 may provide the search filter 950 using the keywords that frequently appear in the keyword reviews for the place.

The processor 220 may perform filtering based on the initial search results based on a keyword selected from the search filter 950. For example, the processor 220 may select a place in which a keyword selected from the search filter 950 is registered as a keyword review among places included in the initial search results as additional search results and may provide a place list 940.

The processor 220 may display a place in which a keyword selected from the search filter 950 is more registered as keyword reviews on a top of the place list 940.

For example, when a search keyword <must-go-restaurant in Hannam-dong> is input on the place search screen 900, the processor 220 may provide the place list 940 corresponding to <must-go-restaurant in Hannam-dong> as initial search results. Here, the processor 220 may provide frequently appearing keywords "view restaurant," "exotic," "rooftop bar," and "new must-go-restaurant" included in the initial search results through the search filter 950. To provide the search filter 950, a process of converting a sentence-type review keyword to a hashtag form may be included. For example, "good view " included in a review keyword list may be converted to "#view restaurant" and thereby applied to the search filter 950.

Referring to FIG. 9, when the user selects "view restaurant" from the search filter 950, the processor 220 may select a place in which the keyword "view restaurant" appears in keyword reviews among places corresponding to <must-go-restaurant in Hannam-dong> as additional search results and may provide the place list 940.

Referring to FIG. 10, when the user selects "exotic" from the search filter 950, the processor 220 may select a place in which the keyword "exotic" appears in keyword reviews among places corresponding to <must-go-restaurant in Hannam-dong> as additional search results and may provide the place list 940.

That is, the processor 220 may support an additional search function of finding a place having each characteristic as a strength by providing a keyword indicating characteristics of the corresponding place through the search filter 950 in a place search environment.

According to some example embodiments, it is possible to replace a one-sided review environment based on a star rating with a review environment for expressing qualitative information of a place by providing a review method for selecting a keyword close to a user experience according to a visit or use from among keywords indicating characteristics of a place.

The apparatuses described above may be implemented using hardware components, software components, and/or a combination thereof. For example, a processing device and components described herein may be implemented using one or more general-purpose or special purpose computers, for example, a processor, a controller, an arithmetic logic unit (ALU), a digital signal processor, a microcomputer, a field programmable gate array (FPGA), a programmable logic unit (PLU), a microprocessor, or any other device capable of responding to and executing instructions in a defined manner. The processing device may run an operating system (OS) and one or more software applications that run on the OS. The processing device also may access, store, manipulate, process, and create data in response to execution of the software. For simplicity, the description of a processing device is used as singular; however, one skilled in the art will be appreciated that the processing device may include multiple processing elements and/or multiple types of processing elements. For example, the processing device may include multiple processors or a processor and a controller. In addition, different processing configurations are possible, such as parallel processors.

The software may include a computer program, a piece of code, an instruction, or some combinations thereof, for independently or collectively instructing or configuring the processing device to operate as desired. Software and/or data may be embodied in any type of machine, component, physical equipment, a computer storage medium or device, or in a propagated signal wave capable of providing instructions or data to or being interpreted by the processing device. The software also may be distributed over network coupled computer systems so that the software is stored and executed in a distributed fashion. The software and data may be stored by one or more computer readable storage mediums.

The methods according to some example embodiments may be configured in a form of program instructions performed through various computer methods and recorded in non-transitory computer-readable media. The media may continuously store computer-executable programs or may temporarily store the same for execution or download. Also, the media may be various types of recording devices or storage devices in a form in which one or a plurality of hardware components are combined. Without being limited to media directly connected to a computer system, the media may be distributed over the network. Examples of the media include magnetic media such as hard disks, floppy disks, and magnetic tapes; optical media such as CD-ROM and DVDs; magneto-optical media such as floptical disks; and hardware devices that are specially configured to store and perform program instructions, such as ROM, RAM, flash memory, and the like. Examples of other media may include recording media and storage media managed by an app store that distributes applications or a site, a server, and the like that supplies and distributes other various types of software.

While this disclosure includes specific example embodiments, it will be apparent to one of ordinary skill in the art that various alterations and modifications in form and details may be made in these example embodiments without departing from the spirit and scope of the claims and their equivalents. For example, suitable results may be achieved if the described techniques are performed in a different order, and/or if components in a described system, architecture, device, or circuit are combined in a different manner, and/or replaced or supplemented by other components or their equivalents. Therefore, other implementations, other example embodiments, and equivalents are within the scope of the following claims.

## Claims

1. A keyword review method performed by a computer system comprising at least one processor configured to execute computer-readable instructions included in a memory, the keyword review method comprising:
, by the at least one processor,
registering at least one of a word, a phrase, and a sentence indicating characteristics of a place as a keyword list related to the place; and
providing the keyword list to a user that visits or uses the place and registering at least one keyword selected from the keyword list as a review for the place.

2. The keyword review method of claim 1, wherein the registering as the keyword list related to the place comprises:
constructing a candidate keyword pool related to each type of business by type of business; and
providing the candidate keyword pool corresponding to a type of business of the place to a relevant person of the place and registered at least one keyword selected from the candidate keyword pool to the keyword list.

3. The keyword review method of claims 1 or 2, wherein the registering as the keyword list related to the place comprises extracting a keyword related to the place from among a document on the Internet, search log data, and a text review related to the place, in a form of at least one of the word, the phrase, and the sentence.

4. The keyword review method of any preceding claim, wherein the registering as the keyword list related to the place comprises extracting a keyword related to the place from a word dictionary that includes a word or a hashtag appearing in a document on the Internet in which the place is mentioned.

5. The keyword review method of any preceding claim, wherein the registering as the keyword list related to the place comprises extracting a keyword related to the place from a text review of the place based on feedback from other users on the text review.

6. The keyword review method of any preceding claim, wherein the registering as the keyword list related to the place comprises registering a keyword related to the place through learning using an artificial intelligence model for a keyword on a document related to the place.

7. The keyword review method of any of claims 2 to 6, wherein the registering as the keyword list related to the place comprises excluding at least one of a keyword indicating factual information and a keyword indicating a negative meaning from the candidate keyword pool.

8. The keyword review method of any preceding claim, wherein the registering as the review for the place comprises registering a review using the keyword list within a preset number of times based on a type of business or a region of the place for each user.

9. The keyword review method of any preceding claim, further comprising:
, by the at least one processor,
visualizing and providing keyword statistics registered as the review for the place.

10. The keyword review method of claim 9, wherein the visualizing and the providing of the keyword statistics comprises providing the keyword statistics by at least one criterion among a unit period, a gender, an age, and a region.

11. The keyword review method of any preceding claim, further comprising:
, by the at least one processor,
providing at least one keyword registered as the review for the place as a search filter for a place search.

12. A non-transitory computer-readable recording medium storing a computer program to computer-implement the keyword review method of any of claims 1 to 11.

13. A computer system comprising:
at least one processor configured to execute computer-readable instructions included in a memory,
wherein the at least one processor is configured to perform:
a process of registering at least one of a word, a phrase, and a sentence indicating characteristics of a place as a keyword list related to the place, and
a process of providing the keyword list to a user that visits or uses the place and registering at least one keyword selected from the keyword list as a review for the place.

14. The computer system of claim 13, wherein the at least one processor is configured to perform:
a process of constructing a candidate keyword pool related to each type of business by type of business, and
a process of providing the candidate keyword pool corresponding to a type of business of the place to a relevant person of the place and registered at least one keyword selected from the candidate keyword pool to the keyword list.

15. The computer system of claims 13 or 14, wherein the at least one processor is configured to perform a process of extracting a keyword related to the place from among a document on the Internet, search log data, and a text review related to the place, in a form of at least one of the word, the phrase, and the sentence.
